# EUROPEAN PATENT APPLICATION

(11) **EP 4 723 675 A1**
(43) Date of publication of application: **08.04.2026**
(21) Application number: 24203818.0
(22) Date of filing: 01.10.2024
(51) Int. Cl.: H04R 1/34, B60Q 3/64

(54) **LOUDSPEAKER ARRANGEMENT**

(71) Applicant: Harman Becker Automotive Systems GmbH, 76307 Karlsbad (DE)
(72) Inventor: JESPEN, Henrik Kirkeby, 76307 Karlsbad (DE)
(74) Representative: Westphal, Mussgnug & Partner, Patentanwälte mbB

(57) **Abstract**

A loudspeaker arrangement comprises a loudspeaker including a diaphragm to transmit an audio output, a light source, and a waveguide surrounding the diaphragm, and configured to control directivity of the audio output, wherein the waveguide comprises an entrance at a first axial end, a mouth at a second axial end of the waveguide opposite the entrance, and a throat extending between the entrance and the mouth, the loudspeaker is positioned at the entrance of the waveguide, and the throat of the waveguide includes at least one surface area of a first kind and at least one surface area of a second kind, wherein each surface area of the at least one surface area of the first kind extends between the entrance and the mouth of the waveguide at a first angle with respect to a central axis, and wherein each surface area of the at least one surface area of the second kind extends between the entrance and the mouth of the waveguide at a second angle with respect to a central axis of the waveguide, wherein the second angle is greater than the first angle, and wherein the central axis of the waveguide is a line that is perpendicular to plane defined by the entrance of the waveguide and intersects the entrance plane at its center.

## Description

### TECHNICAL FIELD

The disclosure relates to a loudspeaker arrangement, in particular to a loudspeaker arrangement comprising an illuminated loudspeaker.

### BACKGROUND

Loudspeakers are used for generating and emitting acoustic sound waves. This is mainly achieved by causing movements of a movable diaphragm by means of a voice coil connected to the diaphragm. Furthermore, there is an increasing need to provide loudspeakers which are illuminated with light. For an illumination of a loudspeaker using light sources provided at or in the speaker, it has to be made sure that the space requirements are not greatly increased when a light source is added to the loudspeaker, especially when the loudspeaker is installed in a vehicle, where limited space is available.

There is a need for a loudspeaker arrangement that allows to effectively illuminate a loudspeaker of the loudspeaker arrangement, which has small space requirements, and can be produced easily and at low costs.

### SUMMARY

The loudspeaker arrangement according to the various embodiments described herein allows to effectively illuminate a loudspeaker of the loudspeaker arrangement. Light that is emitted by a light source integrated into the loudspeaker can be enhanced and intensified in a simple and cost effective way. Further, the light emitted by the light source integrated into the loudspeaker can be directed towards defined directions.

A loudspeaker arrangement is disclosed herein. The loudspeaker arrangement includes a loudspeaker including a diaphragm to transmit an audio output, a light source, and a waveguide surrounding the diaphragm, and configured to control directivity of the audio output, wherein the waveguide includes an entrance at a first axial end, a mouth at a second axial end of the waveguide opposite the entrance, and a throat extending between the entrance and the mouth, the loudspeaker is positioned at the entrance of the waveguide, and the throat of the waveguide includes at least one surface area of a first kind and at least one surface area of a second kind, wherein each surface area of the at least one surface area of the first kind extends between the entrance and the mouth of the waveguide at a first angle with respect to a central axis, and wherein each surface area of the at least one surface area of the second kind extends between the entrance and the mouth of the waveguide at a second angle with respect to a central axis of the waveguide, wherein the second angle is greater than the first angle, and wherein the central axis of the waveguide is a line that is perpendicular to plane defined by the entrance of the waveguide and intersects the entrance plane at its center.

Other systems, features and advantages of the disclosure will be or will become apparent to one with skill in the art upon examination of the following detailed description and figures. It is intended that all such additional systems, methods, features and advantages included within this description be within the scope of the invention and be protected by the following claims.

### BRIEF DESCRIPTION OF THE DRAWINGS

The arrangements and methods may be better understood with reference to the following description and drawings. The components in the figures are not necessarily to scale, emphasis instead being placed upon illustrating the principles of the invention. Moreover, in the figures, the same reference numerals designate the same components throughout the different views.
Figure 1 schematically illustrates a cross-sectional view of a loudspeaker arrangement comprising a loudspeaker and a waveguide.
Figure 2 schematically illustrates a cross-sectional view of a loudspeaker according to one example in greater detail.
Figure 3 schematically illustrates a cross-sectional view of a loudspeaker arrangement according to embodiments of the disclosure.
Figure 4 schematically illustrates a cross-sectional view of a loudspeaker arrangement according to further embodiments of the disclosure.
Figure 5 schematically illustrates a cross-sectional view of a section of a waveguide of a loudspeaker arrangement according to embodiments of the disclosure.
Figure 6 schematically illustrates a frontal view of a waveguide of a loudspeaker arrangement according to embodiments of the disclosure.
Figure 7 schematically illustrates a frontal view of a waveguide of a loudspeaker arrangement according to further embodiments of the disclosure.
Figure 8 schematically illustrates an exploded view of a loudspeaker arrangement according to even further embodiments of the disclosure.

### DETAILED DESCRIPTION

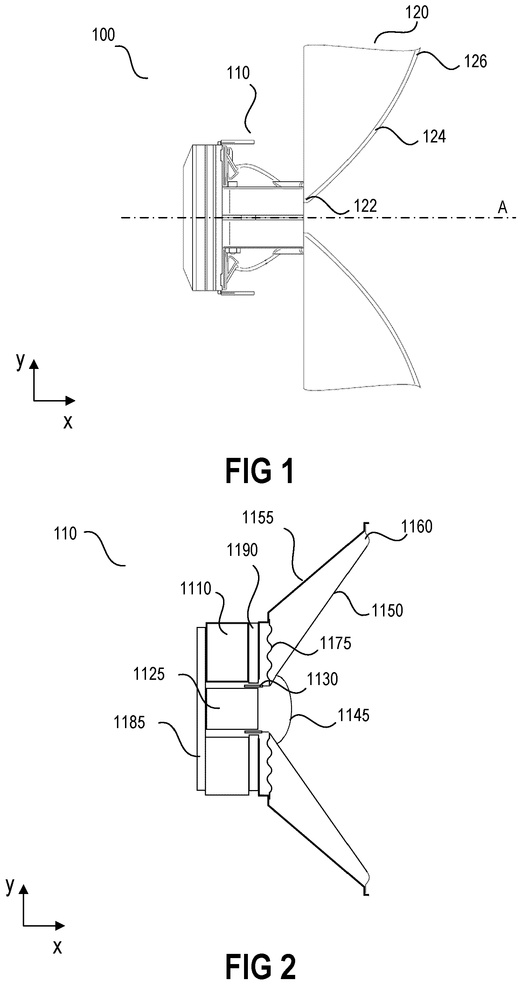

Figure 1 schematically illustrates a cross-sectional view of a loudspeaker arrangement 100. The loudspeaker arrangement 100 comprises a loudspeaker 110 and a waveguide 120. The waveguide 120 at least partially surrounds the loudspeaker 110 (e.g., a diaphragm of the loudspeaker 110), and is configured to control directivity of the audio output. Generally, waveguides may be used to shape an overall directivity of audio transmitted from a loudspeaker 110. For example, a waveguide 120 may be used to either narrow or widen the sound field of audio transmitted from the loudspeaker which may affect both soundstage and tonality. Waveguides, therefore, may serve as an interface to improve directivity and efficiency for a loudspeaker.

Loudspeakers are generally used for generating and emitting acoustic sound waves. This is mainly achieved by causing movements of a movable diaphragm by means of a voice coil connected to the diaphragm. Figure 2 illustrates a cross-sectional view of one example of a conventional loudspeaker 110. The loudspeaker includes a permanent magnet 1110, a back plate 1185, a top plate 1190, a pole piece 1125, and a voice coil 1130. A magnetic gap may be defined between the top plate 1190 and the pole piece 1125. The voice coil 1130 may be arranged in this magnetic gap. The top plate 1190, back plate 1185, and pole piece 1125 may direct the magnetic field of the permanent magnet 1110, thus generating a radial magnetic field in the magnetic gap. The voice coil 1130 may include a wire such as an insulated copper wire wound on a coil, with the two ends of the wire forming the electrical leads of the voice coil 1130. The voice coil 1130 may be centered within the magnetic gap. The two ends of the voice coil wire may be configured to receive a signal from an amplifier (not illustrated). This signal may create an electrical current within the voice coil 1130. The magnetic field in the magnetic gap may interact with the current carrying voice coil 1130, thereby generating a force. The resulting force my cause the voice coil 1130 to move back and forth and consequently displace the cone (or membrane) 1150 from its rest position. The motion of the cone 1150 moves the air in front of the loudspeaker 110, creating sound waves, thus acoustically reproducing the electrical signal.

The cone 1150 extends radially outward from the voice coil 1130, thereby creating a conical or dome-like shape. The cone 1150 may be produced from a variety of materials, including but not limited to plastic, metal, paper, composite material, and any combination thereof. An opening may be defined at the center of the cone 1150 and a dust cap 1145 may create a dome-like cover at the opening. The outer edge of the cone 1150 may be attached to the frame 1155 by a surround 1160. The center of the cone 1150 near the voice coil 1130 may be held in place by a spider 1175. The spider 1175 and surround 1160 together generally allow only for axial movement of the cone 1150. The frame 1155 may be a conical casing that holds the cone 1150 in a fixed position. The frame 1155 may surround the cone 1150 and may include a more rigid material to help maintain the shape and placement of the cone 1150 during operation.

During operation, and while the electrical current is being driven through the voice coil 1130, the voice coil 1130 may move laterally along the pole piece 1125. This movement of the voice coil 1130 may in turn cause movement of the cone 1150. This cone excursion or displacement, in general, is the distance that the cone 1150 moves from a rest position. The distance from the rest position varies as the magnitude of the electric signal supplied to the voice coil 1130 changes. For example, the voice coil 1130, upon receiving an electronic signal with a large voltage, may cause the voice coil 1130 to move out of or further into the magnetic gap. When the voice coil 1130 moves in and out of the magnetic gap, the cone 1150 may be displaced from its rest position.

There is an increasing need to provide loudspeakers which are illuminated with light. For an illumination of a loudspeaker using light sources provided at or in the speaker, it has to be made sure that the space requirements are not greatly increased when a light source is added to the loudspeaker, especially when the loudspeaker is installed in a vehicle, where limited space is available.

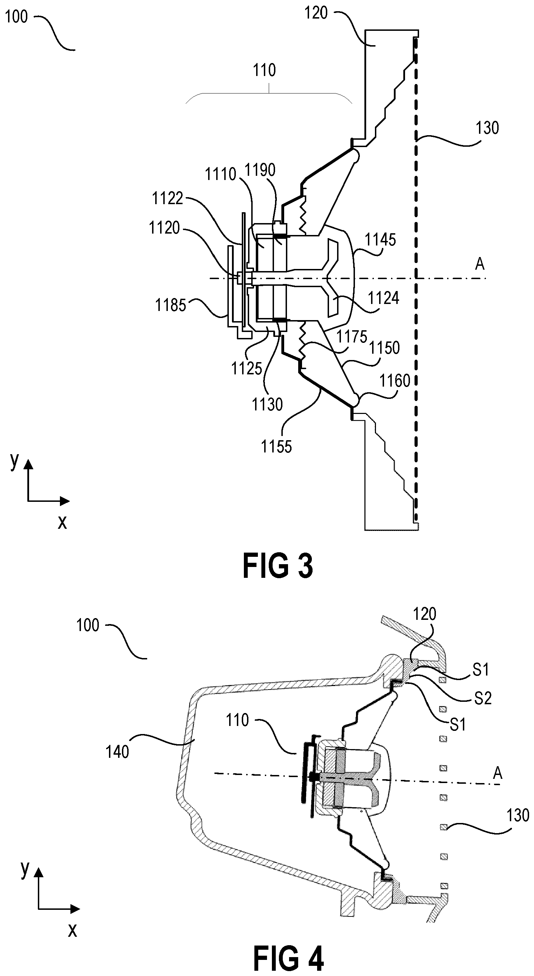

Now referring to Figure 3, a loudspeaker arrangement 100 according to embodiments of the disclosure is schematically illustrated. The loudspeaker 110 illustrated in Figure 3 is similar to the loudspeaker 110 that has been described with respect to Figure 2 above. However, the loudspeaker 110 as illustrated in Figure 3 further comprises a light source 1120. The light source 1120 is arranged on a side of the loudspeaker 110 that faces away from the waveguide 120. The loudspeaker 110 further comprises a light guide 1124 configured to guide light emitted by the light source 1120 to a first side of the loudspeaker 110 to illuminate the diaphragm 1145 and the waveguide 120, the first side of the loudspeaker 110 facing towards the waveguide 120. In the example illustrated in Figure 3, the light guide 1124 extends centrally through the loudspeaker 110. This, however, is only an example. A light guide 1124 may be arranged at any other position with respect to the loudspeaker 110 to guide light emitted by the light source 1120 to the first side of the loudspeaker 110. The light source 1120 may be attached to a printed circuit board 1122, for example. Circuitry that is required for controlling the light source 1120 may be provided on the printed circuit board 1122. According to some embodiments, the light source 1120 comprises or consists of a light emitting diode, LED. The light source 1120 may emit light of any desired color.

The loudspeaker arrangement 100 can be illuminated by means of the light source 1120. However, it may be desirable that the light emitted by the light source 1120 be intensified, distributed and/or guided in specific ways. For this reason, the loudspeaker arrangement 100, and in particular the throat 124 of the waveguide 120 includes at least one surface area of a first kind S1 and at least one surface area of a second kind S2. Each surface area of the at least one surface area of the first kind S1 extends between the entrance 122 and the mouth 126 of the waveguide at a first angle α1 with respect to a central axis A, and each surface area of the at least one surface area of the second kind S2 extends between the entrance 122 and the mouth 126 of the waveguide at a second angle α2 with respect to a central axis A of the waveguide 120, wherein the second angle α2 is greater than the first angle α1. The central axis A of the waveguide 120 is a line that is perpendicular to plane defined by the entrance 122 of the waveguide 120 and intersects the entrance plane at the center of the waveguide 120. That is, the central axis A extends through a center of the entrance plane. In this way, the surface areas of the first kind S1 are inclined further towards the central axis A as compared to the surface areas of the second kind S2. The surface areas of the first kind S1 according to some examples, therefore, reflect light emitted by the light source 1120 more strongly and/or in a different direction as compared to the surface areas of the second kind S2. According to other examples, only the surface areas of the first kind S1 reflect light emitted by the light source 1120, while the surface areas of the second kind S2 do not reflect light emitted by the light source 1120.

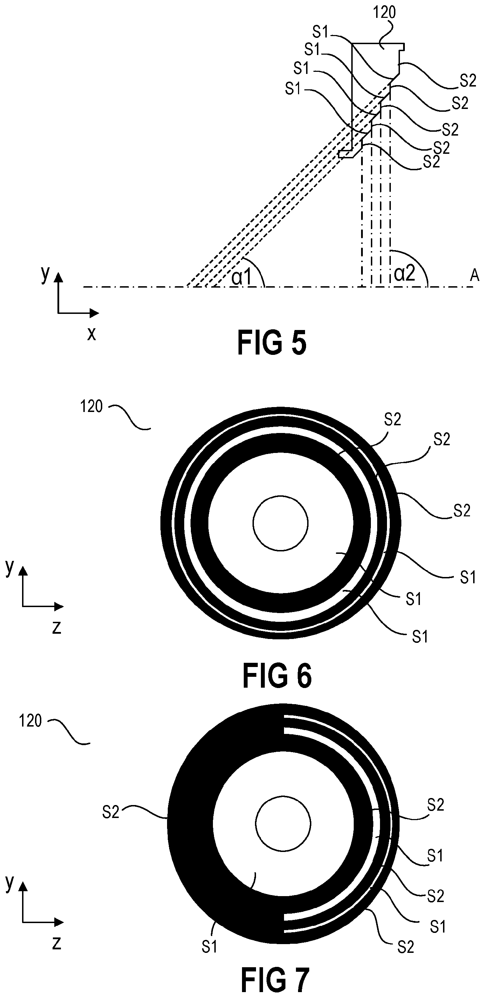

For example, the first angle α1 may be between 0° and 45°, and the second angle α2 may be between 45° and 90°, as is schematically illustrated in Figure 5. In this way, light emitted by the light source 1120 will only be reflected by the surface areas of the first kind S1, but not by the surface areas of the second kind S2. In this way, a specific light pattern may be generated. Even further, the light emitted by the light source 1120 may be directed towards specific directions. This generally depends on the pattern formed by the surface areas of the first kind S1 and the surface areas of the second kind S2, as will be described in further detail below. The surface areas of the first kind S1, the surface areas of the second kind S2 as well as the first angle α1 and second angle α2 are schematically illustrated in Figure 5. In this specific example, the first angle α1 is about 45° and the second angle α2 is about 90°. Other angles α1, α2, however, are generally possible. The first angle α1 may be chosen such that light emitted by the light source 1120 reaches the surface areas of the first kind S1 and is reflected by the surface areas of the first kind S1. The second angle α2 may be chosen such that light emitted by the light source 1120 does not directly reach the surface areas of the second kind S2. It is, however, also possible that the second angle α2 be chosen such that light emitted by the light source 1120 is reflected by the surface areas of the second kind S2 to a lower degree as compared to the surface areas of the first kind S1, and/or such that light emitted by the light source 1120 is reflected by the surface areas of the second kind S2 in a different direction as compared to the light reflected by the surface areas of the first kind S1.

In the example illustrated in Figure 3, the loudspeaker arrangement 100 comprises a plurality of surface areas of the first kind S1, and a plurality of surface areas of the second kind S2. This, however, is only an example. According to some examples, the waveguide 120 comprises at least two surface areas of the first kind S1, and at least one surface area of the second kind S2. This is schematically illustrated in Figure 4. In this example, the distance between the entrance 122 and the mouth 126 of the waveguide 120 is comparably short. In this way, space requirements, e.g., in a vehicle, may be met. In the arrangement illustrated in Figure 4, a loudspeaker basket 140 is arranged to cover the second side of the loudspeaker 110. A loudspeaker basket 140, however, is optional. In the examples illustrated in Figures 3 and 4, the loudspeaker arrangement 100 further comprises a loudspeaker grille 130 covering the mouth 126 of the waveguide 120. A loudspeaker grille 130, however, is also optional.

According to some embodiments, each surface area of the first kind S1 at least partly extends along a circumference of the waveguide 120, and each surface area of the second kind S2 at least partly extends along a circumference of the waveguide 120. For example, each surface area of the first kind S1 may extend along at least 10% of a circumference of the waveguide 120, and each surface area of the second kind S2 may extend along at least 10% of a circumference of the waveguide 120.

Referring to Figure 6, which schematically illustrates a frontal view of a waveguide 120 of a loudspeaker arrangement 100 according to embodiments of the disclosure, each surface area of the first kind S1 and each surface area of the second kind S2 may extend along the entire circumference of the waveguide 120. In the example as illustrated in Figure 6, this results in a circular pattern of the reflected light. In the example illustrated in Figure 7, the surface areas of the first kind only extend along 50% of the circumference of the waveguide 120. In this way, the light emitted by the light source 1120 may be directed towards a specific direction, for example. If the loudspeaker arrangement including a waveguide 120 as schematically illustrated in Figure 7 is arranged in a driver's side front door of a vehicle, for example, the light reflected by the waveguide 120 may only be visible for passengers seated on a back seat of the vehicle, while it may not be visible, or may only be visible with a lower intensity, by a driver of the vehicle seated on the driver's seat. That is, by arranging the surface areas of the first kind S1, and the surface areas of the second kind S2 in a specific way, very dedicated light patterns may be generated. Such light patterns may be visible from all directions, or only from specific directions. The arrangements illustrated in Figures 6 and 7, however, are merely examples. Many other patterns are generally possible by arranging the surface areas of the first kind S1 and the surface areas of the second kind S2 accordingly.

According to some embodiments, the at least one surface area of the first kind S1 and the at least one surface area of the second kind S2 are arranged in an alternating manner between the entrance 122 and the mouth 126 of the waveguide 120. That is, two surface areas of the first kind S1 may be separated by a surface area of the second kind S2, and two surface areas of the second kind S2 may be separated by a surface area of the first kind S1. According to some embodiments, the at least one surface area of the first kind S1 and the at least one surface area of the second kind S2 may be arranged to form a staircase-shaped profile between the entrance 122 and the mouth 126 of the waveguide 120. This staircase-shaped profile may at least partly extend along the circumference of the waveguide 120.

Light emitted by the light source 1120 generally may be reflected by any kind of surface to a certain degree. However, according to some embodiments, each surface area of the first kind S1 may be covered by a reflective layer. For example, the surface areas of the first kind S1 may be covered by a reflective fabric or any kind of fluorescent material. In this way, the intensity of the light emitted by the light source 1120 can be increased even more. Even further, each surface area of the first kind S1 may be covered by a layer having a specific color. In this way, even further light effects may be achieved.

As has been described above, the loudspeaker arrangement 100 may further comprise a loudspeaker grille 130 covering the mouth 126 of the waveguide 120. A loudspeaker grille 130 generally is formed by or comprises a kind of grid or mesh. In this way, the pattern and direction of the light emitted by the light source 1120 and reflected by the surface areas of the first kind S1 may be influenced even further, e.g., by covering specific areas of the arrangement, and leaving other specific areas of the arrangement open.

Generally, implementing the surface areas of the first kind S1 and the surface areas of the second kind S2 does not, or at least not significantly influence the intended effect of the waveguide 120. That is, the waveguide 120 still controls directivity of the audio output, and shapes an overall directivity of audio transmitted from the loudspeaker 110. A listening experience of a user of the loudspeaker arrangement 100 is not negatively affected by the implementation of the surface areas of the first kind S1 and the surface areas of the second kind S2.

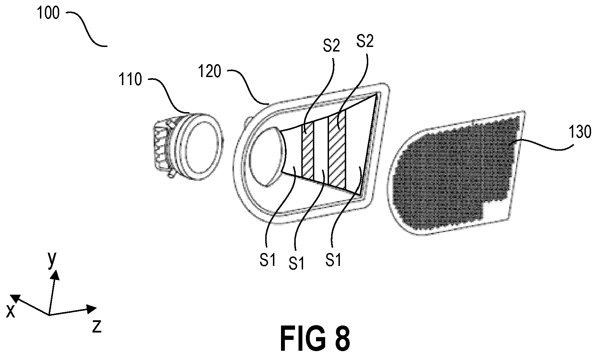

In the examples illustrated in Figures 6 and 7, the waveguide 120 has a generally circular circumference. This, however, is only an example. Waveguides 120 may generally have different shapes, other than circular. For example, oval waveguides 120 are also possible. Referring to Figure 8, a loudspeaker arrangement 100 according to even further embodiments is schematically illustrated. In this example, the waveguide 120 comprises a first (or rear) portion and a second (or front) portion. The diaphragm of the loudspeaker 110 is radially surrounded by the first portion and the second portion. The first portion in this example is formed or shaped in a cone-like manner, while the second portion is comparably flat as compared to the first portion. This results in an asymmetric waveguide 120. Figure 8 exemplarily illustrates surface areas of the first kind S1 and surface areas of the second kind S2 implemented on the second portion of the waveguide 120. This, however, is only an example. As mentioned, a waveguide 120 may have any symmetric or asymmetric shape and the surface areas of the first kind S1 and surface areas of the second kind S2 may be implemented in any suitable way to generate a desired light pattern and guiding and/or intensifying the light emitted by the light source 1120.

A loudspeaker arrangement 100 according to the various embodiments described herein may be arranged in a vehicle. For example, the loudspeaker arrangement 100 may be arranged in a door, in a dashboard, in a roof liner, or in a footwell of the vehicle. A vehicle may comprise a plurality of loudspeaker arrangements.

It is to be noted that the specific arrangement of the light source 1120 as illustrated, e.g., in Figure 3 is only one of several straightforward examples. Generally, one or more light sources 1120 may be arranged at any suitable position(s) in or at the loudspeaker arrangement 100 such that light emitted by the one or more light sources 1120 reaches and is reflected by at least the surface areas of the first kind S1.

It may be understood, that the illustrated systems and methods are merely examples. While various embodiments of the invention have been described, it will be apparent to those of ordinary skill in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof. Accordingly, the invention is not to be restricted except in light of the attached claims and their equivalents.

The description of embodiments has been presented for purposes of illustration and description. Suitable modifications and variations to the embodiments may be performed in light of the above description or may be acquired from practicing the methods. The described arrangements are exemplary in nature, and may include additional elements and/or omit elements. As used in this application, an element recited in the singular and proceeded with the word "a" or "an" should be understood as not excluding plural of said elements, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The subject matter of the present disclosure includes all novel and non-obvious combinations and sub-combinations of the various systems and configurations, and other features, functions, and/or properties disclosed. The following claims particularly point out subject matter from the above disclosure that is regarded as novel and non-obvious.

## Claims

1. A loudspeaker arrangement (100) comprises:
a loudspeaker (110) including a diaphragm (1145) to transmit an audio output;
a light source (1120); and
a waveguide (120) surrounding the diaphragm (1145), and configured to control directivity of the audio output, wherein
the waveguide (120) comprises an entrance (122) at a first axial end, a mouth (126) at a second axial end of the waveguide (120) opposite the entrance (122), and a throat (124) extending between the entrance (122) and the mouth (126),
the loudspeaker (110) is positioned at the entrance (122) of the waveguide (120), and
the throat (124) of the waveguide (120) includes at least one surface area of a first kind (S1) and at least one surface area of a second kind (S2), wherein each surface area of the at least one surface area of the first kind (S1) extends between the entrance (122) and the mouth (126) of the waveguide at a first angle (α1) with respect to a central axis (A), and wherein each surface area of the at least one surface area of the second kind (S2) extends between the entrance (122) and the mouth (126) of the waveguide at a second angle (α2) with respect to a central axis (A) of the waveguide (120), wherein the second angle (α2) is greater than the first angle (α1), and wherein the central axis (A) of the waveguide (120) is a line that is perpendicular to plane defined by the entrance (122) of the waveguide (120) and intersects the entrance plane at its center.

2. The loudspeaker arrangement (100) of claim 1, wherein the first angle (α1) is between 0° and 45°, and wherein the second angle (α2) is between 45° and 90°.

3. The loudspeaker arrangement (100) of claim 1 or 2, wherein the waveguide (120) comprises at least two surface areas of the first kind (S1), and at least one surface area of the second kind (S2).

4. The loudspeaker arrangement (100) of any of claims 1 to 3, wherein
each surface area of the first kind (S1) at least partly extends along a circumference of the waveguide (120); and
each surface area of the second kind (S2) at least partly extends along a circumference of the waveguide (120).

5. The loudspeaker arrangement (100) of claim 4, wherein
each surface area of the first kind (S1) extends along at least 10% of a circumference of the waveguide (120); and
each surface area of the second kind (S2) extends along at least 10% of a circumference of the waveguide (120)

6. The loudspeaker arrangement (100) of any of the preceding claim, wherein the at least one surface area of the first kind (S1) and the at least one surface area of the second kind (S2) are arranged in an alternating manner between the entrance (122) and the mouth (126) of the waveguide (120).

7. The loudspeaker arrangement (100) of any of the preceding claim, wherein the at least one surface area of the first kind (S1) and the at least one surface area of the second kind (S2) are arranged to form a staircase-shaped profile between the entrance (122) and the mouth (126) of the waveguide (120).

8. The loudspeaker arrangement (100) of any of the preceding claims, wherein the loudspeaker (110) is positioned at the entrance (122) of the waveguide (120) with a first side of the loudspeaker (110) facing towards the waveguide (120), and wherein the light source (1120) is arranged on a second side of the loudspeaker (110), opposite the first side.

9. The loudspeaker arrangement (100) of claim 8, further comprising a light guide (1124) configured to guide light emitted by the light source (1120) to the first side of the loudspeaker (110) to illuminate the diaphragm (1145) and the waveguide (120).

10. The loudspeaker arrangement (100) of any of the preceding claims, wherein each surface area of the first kind (S1) is covered by a reflective layer.

11. The loudspeaker arrangement (100) of any of the preceding claims, further comprising a loudspeaker grille (130) covering the mouth (126) of the waveguide (120)

12. A vehicle comprising the loudspeaker arrangement (100) of any of claims 1 to 11.
